Europäisches Patentamt

European Patent Office

Office européen des brevets

(19)

(11) Veröffentlichungsnummer : **0 339 231 B1**

(12) ## EUROPÄISCHE PATENTSCHRIFT

(45) Veröffentlichungstag der Patentschrift :
04.09.91 Patentblatt 91/36

(51) Int. Cl.⁵ : **A01D 34/66**, A01D 78/10,
A01D 67/00

(21) Anmeldenummer : **89104532.0**

(22) Anmeldetag : **14.03.89**

(54) Landwirtschaftliche Mäh- und Heumaschine.

(30) Priorität : 14.03.88 DE 3808423
29.03.88 DE 3810634
18.10.88 DE 3835366
18.10.88 DE 3835367

(43) Veröffentlichungstag der Anmeldung :
02.11.89 Patentblatt 89/44

(45) Bekanntmachung des Hinweises auf die
Patenterteilung :
04.09.91 Patentblatt 91/36

(84) Benannte Vertragsstaaten :
AT BE CH DE ES FR GB IT LI NL SE

(56) Entgegenhaltungen :
EP-A- 0 116 661
CH-A- 399 041
DE-A- 1 457 953
DE-A- 1 782 238
DE-A- 2 143 315
DE-A- 2 653 974
DE-A- 2 833 814
DE-A- 3 151 481
DE-B- 1 202 554

(56) Entgegenhaltungen :
DE-U- 8 631 593
FR-A- 1 499 066
FR-A- 1 566 084
FR-A- 1 568 923
FR-A- 2 091 325
FR-A- 2 189 990
FR-A- 2 232 980
FR-A- 2 414 863
GB-A- 2 007 958
GB-A- 2 052 237
NL-A- 299 716
US-A- 3 910 019
US-A- 4 026 093

(73) Patentinhaber : **Nusser, Josef**
Hauptstrasse 9
W-7963 Eichstegen (DE)

(72) Erfinder : **Nusser, Josef**
Hauptstrasse 9
W-7963 Eichstegen (DE)

(74) Vertreter : **Wuesthoff, Franz, Dr.-Ing. et al**
Patentanwälte Wuesthoff & Wuesthoff
Schweigerstrasse 2
W-8000 München 90 (DE)

EP 0 339 231 B1

Jouve, 18, rue Saint-Denis, 75001 PARIS

EP 0 339 231 B1

## Beschreibung

Die Erfindung betrifft eine Mäh- oder Heumaschine mit mindestens einem rotierend antreibbaren Mäh- oder Rechwerk, das mit als Mähmesser oder als Rechzinken ausgebildeten, eine Arbeitsebene definierenden Werkzeugen versehen und mittels einer Ausgleichsvorrichtung an einem mit einem Schlepper verbindbaren Traggestell um eine quer zur Fahrtrichtung verlaufende Schwenkachse schwenkbar abgestützt ist.

Landwirtschaftliche Maschinen dieser Art sind in einer großen Anzahl unterschiedlicher Ausgestaltungen bekannt. Die Mäh- oder Rechwerke sind hierbei an einem Schlepper angehängt oder angebaut. Um im Betrieb eine Anpassung an den jeweiligen Geländeverlauf vornehmen zu können, ist das Mäh- oder Rechwerk, an dem die Mäh- oder Rechwerkzeuge angebracht sind, in verhältnismäßig großer Höhe weit ausladend gelenkig am Schlepper abgestützt. Durch Bremsen, Beschleunigen oder beim Überfahren von Bodenunebenheiten auftretende Nickbewegungen wirken sich bei solcher Abstützung nachteilig auf das Arbeitsergebnis und auf das Mäh- oder Rechwerk aus, weil dieses durch den Schlepper in eine ungünstige Lage gezwungen werden kann. Dadurch entstehen hohe Momente um eine Querachse ; diese Momente werden durch die hohe Anlenkung am Schlepper noch verstärkt und können z.B. bei Maschinen mit einem Drei- oder Vierrad-Fahrwerk dazu führen, daß die vorderen Räder stärker als die hinteren belastet werden. Das gilt analog auch für Mäh- oder Rechwerke, die mit einem Gleitteller versehen sind.

Die Folge davon ist, daß die Mäh- oder Rechwerke, besonders die an diesen angebrachten Mäh- oder Rechwerkzeuge, die Neigung haben, vorne stärker in den Boden einzudringen. Dies führt zu einer Verletzung der Grasnarbe und zur Verschmutzung des Erntegutes mit Bodenteilchen. Auch können die Werkzeuge dabei deformiert werden oder zu Bruch gehen. Außerdem können durch Bodenberührungen Belastungsspitzen und dadurch auch Schäden an der Maschine auftreten ; ein größerer Verschleiß und ein hoher Leistungsbedarf sind meist unvermeidbar.

Durch eine Verstärkung der Bauweise ist dieses Problem nicht zu lösen. Abgesehen von der Verteuerung hätte eine schwerere Bauweise den Nachteil einer schlechten Manövrierfähigkeit des Gespanns und einer weiteren Erhöhung des Leistungsbedarfs, ohne daß die Arbeitsleistung verbessert würde. Auch wäre keine Steigerung der Fahrgeschwindigkeit und der Arbeitsbreite möglich.

Aufgabe der Erfindung ist es daher, eine Mäh- oder Heumaschine der vorgenannten Gattung zu schaffen, bei der die genannten Nachteile vermieden werden. Dabei sollen sich die Werkzeuge leichtgängig und schnell reagierend in der vorgesehenen Arbeitshöhe über die gesamte Arbeitsbreite an den jeweiligen Bodenverlauf anpassen können. Den Mäh- oder Rechwerken sollen somit die Bewegungen des Schleppers oder eines eigenen zugeordneten Fahrwerks nicht aufgezwungen werden, die Mäh- oder Rechwerke sollen vielmehr Eigenbewegungen ausführen und dem Bodenverlauf folgen können, so daß der Fahrtwiderstand und die Maschinenbelastung niedrig gehalten und Beschädigungen der Grasnarbe sowie Beschädigungen der Werkzeuge und eine Verschmutzung des Erntegutes weitgehend vermieden werden. Die Aufstandsfläche oder die Räder des Mäh- oder Rechwerkes sollen demnach etwa parallel zur Bodenoberfläche verlaufen, und Bodenunebenheiten sollen leicht auszugleichen sein, ohne daß sich Nickbewegungen des Zugfahrzeugs oder des Fahrwerks nachteilig auswirken können. Der dazu erforderliche Bauaufwand soll gering gehalten werden, dennoch soll eine hohe Betriebssicherheit gewährleistet sein. Auch sollen plötzlich auftretende Hindernisse leicht überwunden werden können.

Gemäß der Erfindung wird dies bei einer Mäh- oder Heumaschine der eingangs beschriebenen Gattung dadurch erreicht, daß die Ausgleichsvorrichtung derart ausgebildet ist, daß mindestens eine quer zur Fahrtrichtung liegende Schwenkachse des Mäh- oder Rechwerks durch einen unterhalb der Arbeitsebene angeordneten Momentanpol verläuft.

Ausgestaltungen der Ausgleichsvorrichtung sowie vorteilhafte Weiterbildungen sind den Unteransprüchen zu entnehmen.

Wird eine landwirtschaftliche Mäh- oder Heumaschine gemäß der Erfindung ausgebildet, so ist es möglich, Bodenunebenheiten im unmittelbaren Bereich der Mäh- oder Rechwerkzeuge auszugleichen, und zwar unabhängig von dem Zugfahrzeug und/oder dem Traggestell. Durch die gelenkige Aufhängung mit Schwenkmöglichkeit um die erfindungsgemäß angeordnete querliegende Schwenkachse und gegebenenfalls mit Schwenkmöglichkeit des Mäh- oder Rechwerks um eine oder mehrere weitere Schwenkachsen, die vorzugsweise ebenfalls im Bereich der Arbeitsebene liegen, ist die Schwenkbewegung beim Auftreffen auf ein Hindernis derart, daß das Mäh- oder Rechwerk im vorderen Bereich hochschwenkt und über das Hindernis hinweggeht, so daß dessen Schneidmesser oder Zinken nicht in den Boden gedrückt werden. Beschädigungen des Bodens und/oder der Schneidmesser bzw. der Zinken werden somit weitgehend vermieden, auch ist eine schonende Behandlung des Erntegutes gegeben.

Durch Nickbewegungen des Schleppers und/oder des Tragrahmens und/oder des Fahrgestells hervorgerufene Momente werden auf diese Weise ausgeglichen. Die erfindungsgemäße Ausgestaltung ermöglicht auf-

2

grund der durch das Maschinengewicht bewirkten Anpassung der einzelnen Mäh- oder Rechwerke an die Oberfläche des Bodens hohe Fahrgeschwindigkeiten und große Arbeitsbreiten, so daß auch ein wirtschaftlicher Einsatz gegeben ist.

In den Zeichnungen sind einige Ausführungsbeispiele von landwirtschaftlichen Mäh- oder Heumaschinen mit gemäß der Erfindung ausgebildeten Ausgleichsvorrichtungen dargestellt, die nachfolgend im einzelnen erläutert werden. Hierbei zeigt jeweils in schematischer Darstellung :

| Fig. 1 | ein Anbaumähwerk mit einer Ausgleichsvorrichtung in Seitenansicht, |
|---|---|
| Fig. 2 | das Anbaumähwerk nach Fig. 1 mit einer andersartigen Ausgleichsvorrichtung in Seitenansicht, |
| Fig. 3 | ein mit zwei Ausgleichsvorrichtungen versehenes Anbaumähwerk in Rückansicht, |
| Fig. 4 | eine Heumaschine mit Ausgleichsvorrichtungen in Seitenansicht, |
| Fig. 5 | eine Heumaschine mit andersartiger Ausgleichsvorrichtung in perspektivischer Darstellung, |
| Fig. 6 | eine Heumaschine mit zwei Rechwerken und in eine Zugvorrichtung integrierter Ausgleichsvorrichtung in perspektivischer Darstellung, |
| Fig. 7 | die Heumaschine nach Fig. 6 mit den Rechwerken zugeordneten Ausgleichsvorrichtungen, |
| Fig. 8 | eine Ausgleichsvorrichtung für eine Längsund Querachse in perspektivischer Darstellung, |
| Fig. 9 | eine als räumliches Lenkergetriebe ausgebildete um zwei Achsen wirksame Ausgleichsvorrichtung in perspektivischer Darstellung, |
| Fig. 10 bis 14 | weitere Ausführungsformen von Ausgleichsvorrichtungen, |
| Fig. 15 bis 23 | als Gelenkvierecke ausgebildete Ausgleichsvorrichtungen in unterschiedlichen Ausgestaltungen, |
| Fig. 24 | eine mit einem Kugelsegment ausgestattete Ausgleichsvorrichtung in perspektivischer Darstellung, |
| Fig. 25 | eine mit Kugelgelenken ausgestattete Ausgleichsvorrichtung mit einem Scheibenmähwerk in Seitenansicht, |
| Fig. 26 | ein verstellbares Scheibenmähwerk mit Ausgleichsvorrichtung, |
| Fig. 27 | eine mit mehreren Mähwerken und Ausgleichsvorrichtungen ausgestattete Mähmaschine in Rückansicht und |
| Fig. 28 | eine weitere Ausgestaltung einer als Gelenkviereck ausgebildeten Ausgleichsvorrichtung. |

In den Zeichnungen sind die dargestellten Mäh- oder Heumaschinen, deren Mäh- und Rechwerke sowie die diesen unmittelbar zugeordneten Bauteile jeweils mit den gleichen Bezugsziffern versehen, obwohl die Mäh- und Rechwerke teilweise unterschiedlich gestaltet sind.

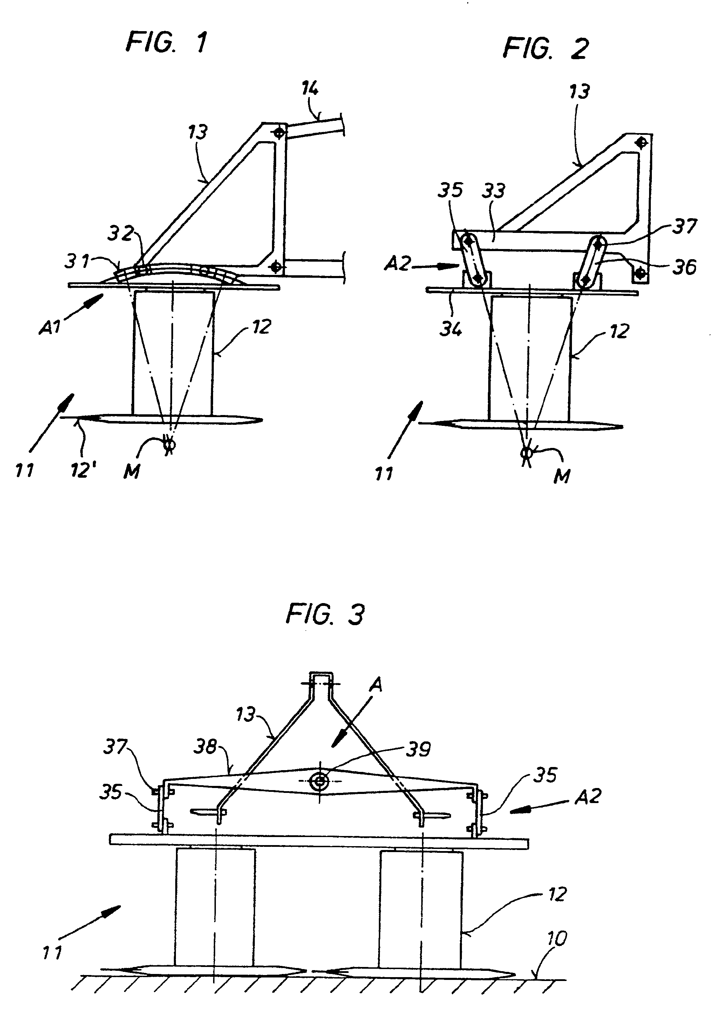

Gemäß Fig. 1 ist ein mit einem Mähmesser 12' ausgestattetes Mähwerk 12 einer Mähmaschine 11 mittels einer Ausgleichsvorrichtung A1 mit einem Traggestell 13 verbunden, das mittels Lenkern 14 an der Vorderseite eines Schleppers angebaut ist. Die Ausgleichsvorrichtung A1 weist eine kreisbogenförmig gekrümmte Führungsbahn 31 in Form einer Kulisse auf, in der Gleitkörper 32 verschiebbar geführt sind. Die Führungsbahn 31 ist mit dem Traggestell 13 verbunden, die Gleitkörper 32 dagegen mit dem Mähwerk 12, so daß dieses um eine von der geometrischen Achse der Führungsbahn 31 gebildete Schwenkachse M verschwenkbar aufgehängt ist. Da die Schwenkachse M unterhalb der Aufstandsfläche des Mähwerks 12 angeordnet ist, erfährt dieses beim Auftreffen auf ein Hindernis bei Vorwärtsfahrt ein rechtsdrehendes Moment, so daß es an der Vorderseite gewichtsentlastet und leicht über ein Hindernis hinweggeführt wird.

Bei dem Ausführungsbeispiel nach Fig. 2 ist die Ausgleichsvorrichtung A2 als Gelenkviereck ausgebildet mit einer Basis 33, einer Schwinge 34 sowie Lenkern 35 und 36, die mittels Bolzen 37 an dem Traggestell 13 und dem Mähwerk 12 angelenkt sind. Der Momentanpol des Gelenkvierecks bestimmt die Schwenkachse M.

Die Mähmaschine nach Fig. 3 ist außer mit der Ausgleichsvorrichtung A2 gemäß Fig. 2 mit einer weiteren Ausgleichsvorrichtung A versehen, die durch eine Welle 39 gebildet ist, auf der eine Quertraverse 38 aufgehängt ist, an der über die Ausgleichsvorrichtung A2 zwei Mähwerke 12 gehalten sind. Damit ist eine Bodenanpassung um eine querliegende Schwenkachse wie in Fig. 2 und um eine längsverlaufende Schwenkachse möglich.

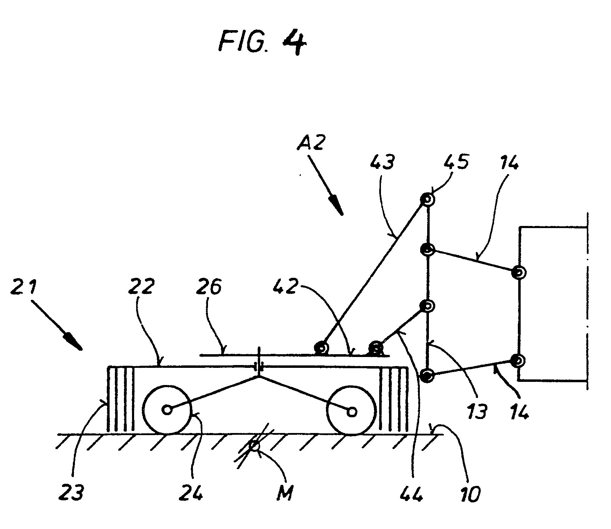

Fig. 4 zeigt eine Heumaschine 21 mit einem Rechwerk 22, das mit Rechzinken 23 versehen und mittels eines Fahrwerks 24 auf dem Boden abgestützt ist. Das Rechwerk 22 ist an einem Maschinenrahmen 26 drehbar gelagert, der über eine Ausgleichsvorrichtung A2 mit einem an Lenkern 14 befestigten Traggestell 13 verbunden ist. Ein Teil des Traggestells 13 bildet die Basis eines Gelenkvierecks, ein Teil 42 des Maschinenrahmens

3

26 die Schwinge, und Lenker 43, 44 stellen die Verbindung zwischen beiden her. Die Verlängerungen der Lenker 43, 44 schneiden sich in der querliegenden Schwenkachse M.

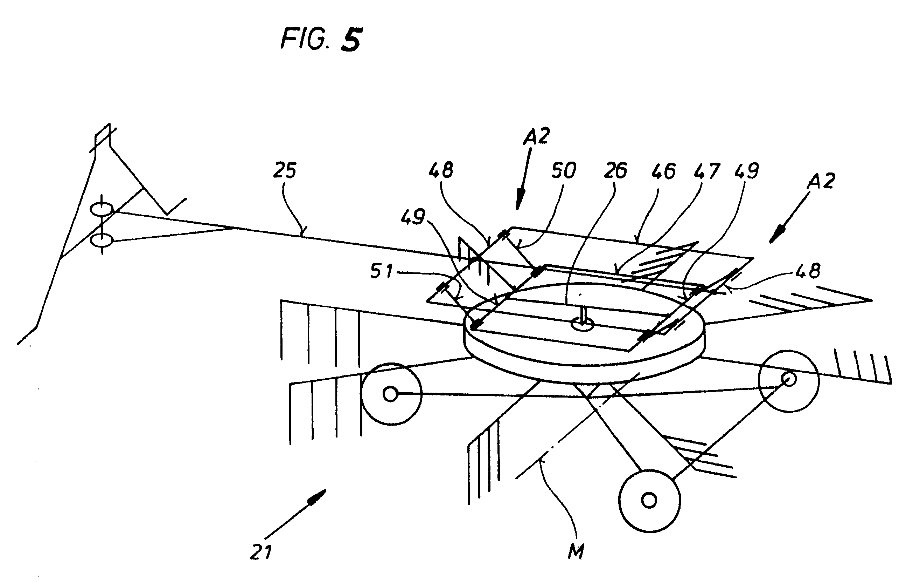

Die Heumaschine 21 nach Fig. 5 ist mittels eines nicht bezifferten Anbaubockes, der vertikal gerichtete Schwenkachsen aufweist, an einen Schlepper anschließbar. Unterhalb eines Maschinenrahmens 26 ist ein zum Schwaden vorgesehenes Werkzeug angeordnet, das um eine etwa senkrechte Achse drehbar ist und Zinkenträger mit Zinken besitzt. Unter dem Werkzeug ist ein am Maschinenrahmen 26 befestigtes Dreiradfahrwerk angeordnet.

Das Traggestell 25 besitzt zwei querliegende Schenkel 48 ; der Maschinenrahmen 26 hat ebenfalls zwei solche Schenkel 49. Die freien Enden der Schenkel 48, 49 sind durch Lenker 50, 51 miteinander verbunden und bilden damit ein Gelenkviereck als Ausgleichsvorrichtung A2 mit einer dem Traggestell 25 zugehörigen Basis 46 und einer dem Maschinenrahmen 26 zugehörigen Schwinge 47. Die gedachten Verlängerungen der Lenker 50, 51 des Gelenkvierecks treffen sich jeweils in einem Punkt, dem Momentanpol, durch den die querliegende Schwenkachse M definiert ist. Bei Bodenunebenheiten kann sich das Mähwerk 21 um die querliegende Schwenkachse M relativ zu dem Traggestell 25 drehen, so daß sich der Maschinenrahmen 26 weitgehend unabhängig vom Schlepper an Bodenwellen anpassen kann.

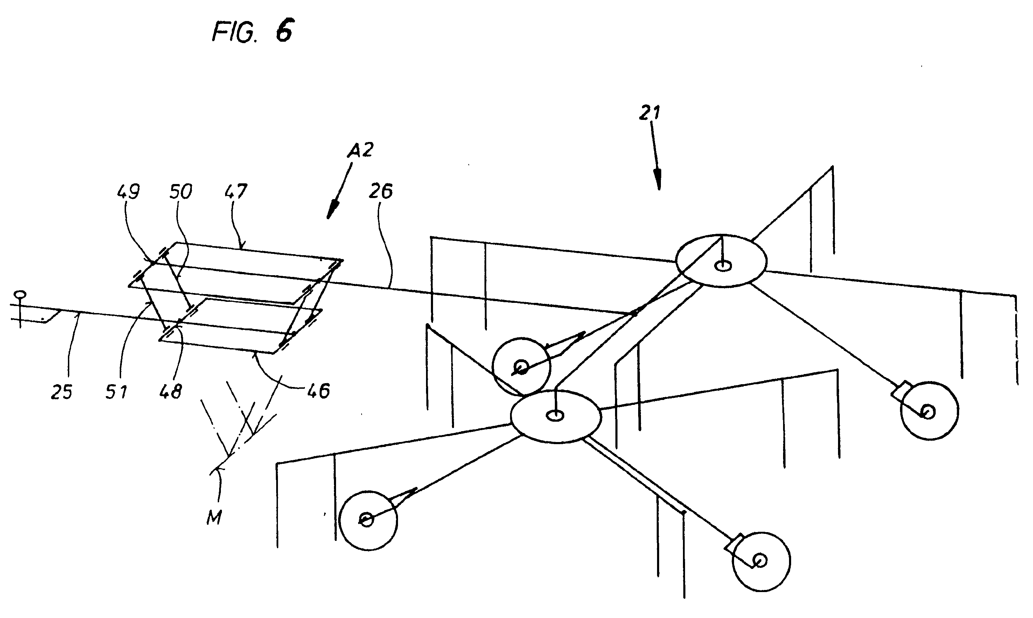

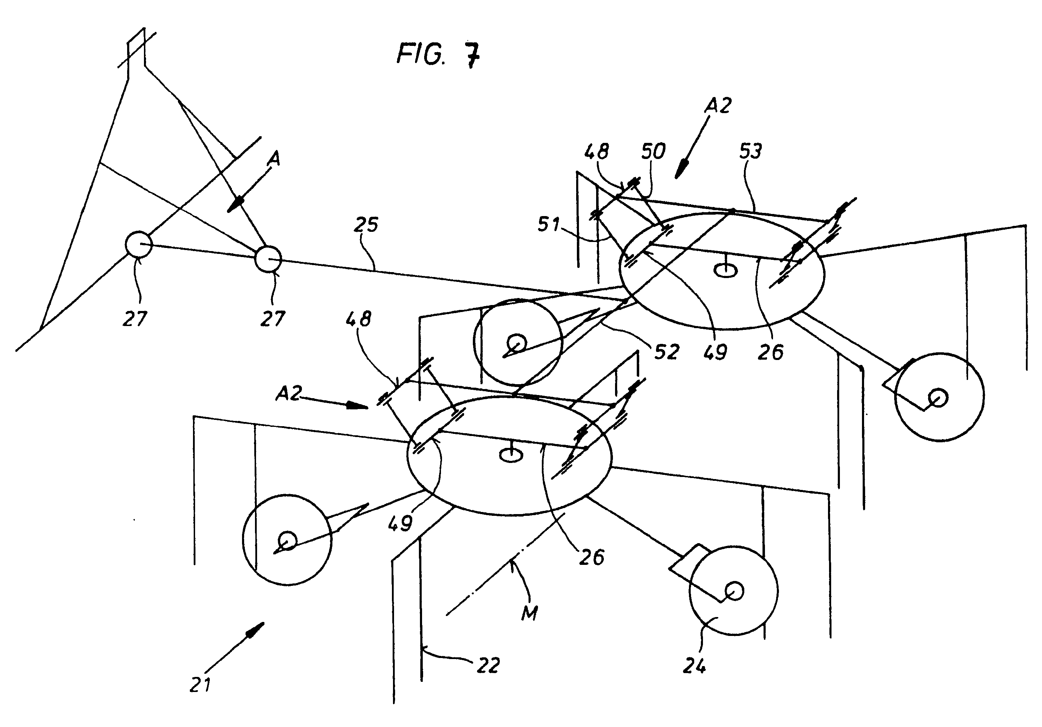

In Fig. 6 ist eine gezogene Zweikreiselmaschine 21 mit einem Vierradfahrwerk dargestellt. Das linke und das rechte Radpaar befinden sich unter je einem Werkzeug. Das Traggestell 25 ist als Zugdeichsel ausgebildet. Zwischen dem Traggestell 25 und dem Maschinenrahmen 26 ist eine analoge Ausgleichsvorrichtung A2 wie in Fig. 5 angeordnet. Ein Unterschied besteht darin, daß sich das Traggestell 25 hier unterhalb des Maschinenrahmens 26 befindet. Auch hier können sich die Werkzeuge relativ zum Traggestell 25 um eine unterhalb des Traggestells 25 und des Maschinenrahmens 26 angeordnete querliegende Schwenkachse M verschwenken und sich so Bodenunebenheiten anpassen.

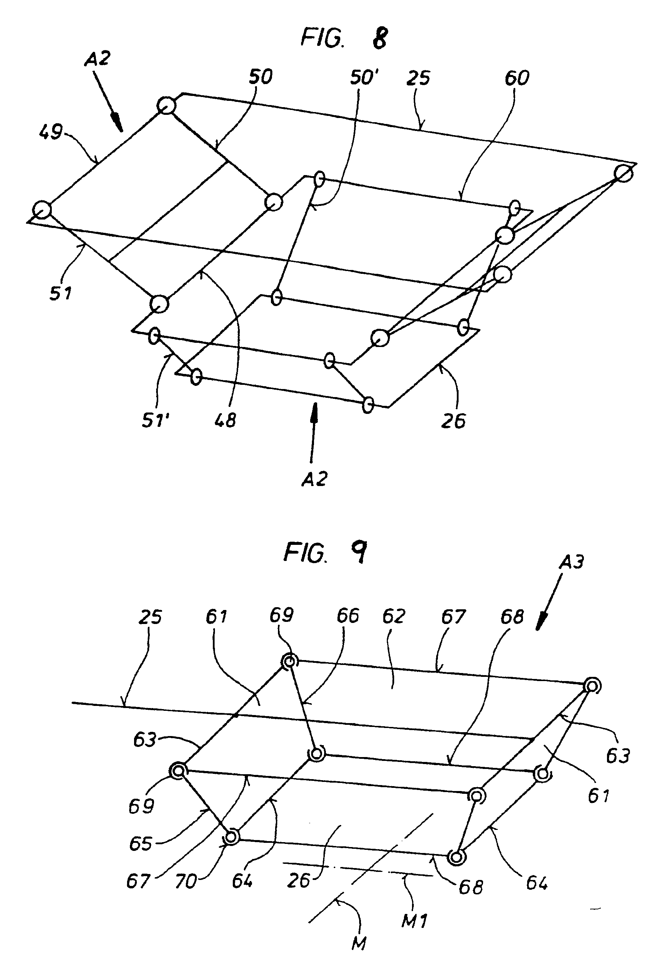

Die Heumaschine 21 nach Fig. 7 weist zwei selbständig antreibbare Rechwerke 22 auf, die samt einem Fahrwerk 24 an einem Maschinenrahmen 26 gelagert sind. Ein Traggestell 25 ist an seinem vorderen Ende in einem mit Lagern 27 ausgestatteten Lagerbock drehbar gelagert, wodurch eine Ausgleichsvorrichtung A geschaffen ist. Das Traggestell 25 weist eine querliegende Traverse 52 mit in Längsrichtung liegenden Konsolen 53 auf. Diese besitzen ihrerseits querliegende Schenkel 48 und an den Maschinenrahmen 26 sind Schenkel 49 angebaut. Diese sind über Lenker 50, 51 mit den Schenkeln 48 gelenkig verbunden. Auf diese Weise werden wiederum Gelenkvierecke als Ausgleichsvorrichtungen A2 derart gebildet, daß die Rechwerke 22 und das Fahrwerk 24 um eine unterhalb von ihnen angeordnete querliegende Schwenkachse M schwenkbar sind.

In Fig. 8 sind zwei schematisch dargestellte Ausgleichsvorrichtungen A2, um Längs- und Querbewegungen ausgleichen zu können, über einen Zwischenrahmen 60 zu einer Baueinheit zusammengefaßt. Ein waagerechtes Traggestell 25 stellt die Basis, und ein Zwischenrahmen 60 die Schwinge für ein oberes Gelenkviereck dar, das am Traggestell 25 und am Zwischenrahmen 60 gelenkig gelagerte Lenker 50 und 51 aufweist und dessen Momentanpol im Schnittpunkt der geradlinigen Verlängerungen der Lenker 50, 51 liegt und eine Schwenkachse, beispielsweise eine Längsachse, bestimmt. Weitere Lenker 50', 51' stellen durch gelenkige Anlenkung am Zwischenrahmen 60 und am Maschinenrahmen 26 eine Verbindung zwischen beiden her. Dadurch wird ein weiteres Gelenkviereck gebildet, dessen Momentanpol im Schnittpunkt der geradlinigen Verlängerungen der Lenker 50', 51' verläuft und eine querliegende Schwenkachse bestimmt. Bei dieser Anordnung ist vorgesehen, daß sich die Schwenkachsen etwa rechtwinklig kreuzen.

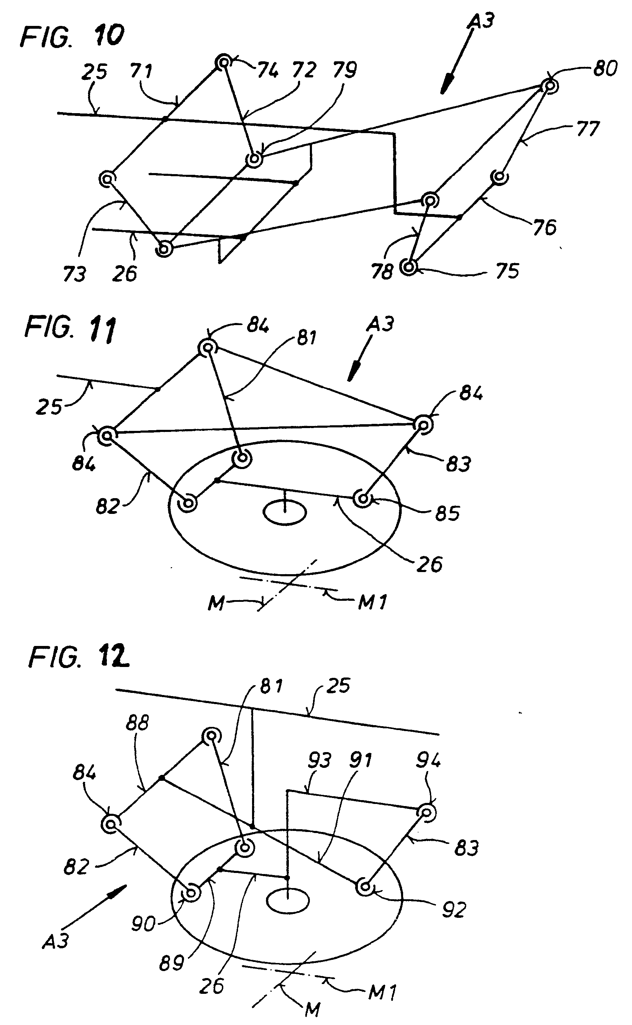

In Fig. 9 ist eine als räumliches Lenkergetriebe ausgebildete Ausgleichsvorrichtung A3 dargestellt. Auch hierbei sind Schwenkbewegungen sowohl um eine längsverlaufende Schwenkachse M als auch um eine querliegende Schwenkachse M1 möglich. Querschenkel 63, die dem Traggestell 25 zugehören, haben kugelgelenkig ausgebildete Endpunkte 69, die die Ecken eines (gedachten) Rechtecks darstellen. Querschenkel 64, die dem Maschinenrahmen 26 zugehören, haben ebenfalls kugelgelenkig ausgebildete Endpunkte 70, die die Ecken eines kleineren Rechtecks bilden. Die Endpunkte 69 sind über Lenker 65, 66 mit je einem Endpunkt 70 gelenkig verbunden. Die Querschenkel 63 und 64 sowie die Lenker 65 und 66 bilden geneigte Trapeze 61, deren Ebenen sich in Verlängerung nach unten in einer Geraden schneiden, die eine längsverlaufende Schwenkachse M1 bilden. Ebenso bilden die Längsschenkel 67, 68 sowie die Lenker 65, 66 Trapeze 62, deren Ebenen sich in Verlängerung nach unten in einer querliegenden Schwenkachse M schneiden.

In Fig. 10 ist eine durch ein räumliches Lenkergetriebe gebildete Ausgleichsvorrichtung A3 gezeigt. An einem dem Traggestell 25 zugehörigen Schenkel 71 sind an Gelenkpunkten 74 zwei Lenker 72, 73 nach unten konvergierend, und an Gelenkpunkten 75 eines ebenfalls dem Traggestell 25 zugeordneten Schenkels 76 zwei Lenker 77, 78 nach oben divergierend kugelgelenkig angelenkt. Mit ihren freien Enden sind die Lenker 72, 73 und 77, 78 an Gelenkpunkten 79 bzw. 80 des Maschinenrahmens 26 ebenfalls kugelgelenkig angelenkt und stellen so die Verbindung zwischen dem Traggestell 25 und dem Maschinenrahmen 26 her. Die oberen Gelenkpunkte 74, 80 stellen die Eckpunkte eines gedachten Vierecks dar, das größer ist als das darunterliegende kleinere gedachte Viereck, dessen Eckpunkte durch die unteren Gelenkpunkte 75, 79 gegeben sind, so daß die Lenker zwei unterhalb der Ausgleichsvorrichtung A2 liegende Schwenkachsen aufweisen, von denen eine längs und die andere quer verläuft.

Fig. 11 zeigt ebenfalls eine als räumliches Lenkergetriebe ausgebildete Ausgleichsvorrichtung A3 mit drei Lenkern 81, 82, 83, die an Eckpunkte eines Dreiecks darstellenden Gelenkpunkten 84 des Traggestells 25 kugelgelenkig angelenkt sind und nach unten konvergieren. Durch kugelgelenkige Anlenkung an zum Maschinenrahmen 26 gehörigen, die Eckpunkte für ein kleineres Dreieck darstellenden Gelenkpunkten 85 ist das Traggestell 25 mit dem Maschinenrahmen 26 verbunden. Diese Ausgestaltung ermöglicht auf einfache Weise Schwenkbewegungen, beispielsweise um zwei Schwenkachsen M und M1, von denen eine quer und die andere längs verläuft.

Fig. 12 zeigt eine Ausgleichsvorrichtung A3, ähnlich wie in Fig. 10 und 11 dargestellt. Das Traggestell 25 weist hier an seinem unteren Teil eine geneigt verlaufende Traverse 91 auf, deren oberes Ende an einem Schenkel 88 endet und an dessen Ende sich Gelenkpunkte 84 befinden. Ein weiterer Gelenkpunkt 92 befindet sich am unteren Ende der Traverse 91. Die Gelenkpunkte 84 und 92 sind dem Traggestell 25 zugehörig. Zwei dem Maschinenrahmen 26 zugehörige Gelenkpunkte 90 befinden sich an den Enden eines mit dem Maschinenrahmen 26 eine Einheit bildenden Schenkels 89. Am Ende eines am Maschinenrahmen 26 angeschlossenen Arms 93 ist ein weiterer Gelenkpunkt 94. Durch kugelgelenkige Anlenkung von die Gelenkpunkte 84, 90 und 92, 94 verbindenden Lenkern 81, 82, 83 wird das Traggestell 25 mit dem Maschinenrahmen 26 verbunden. Der Verlauf der Schwenkachsen M, M1 ist ähnlich der Fig. 11.

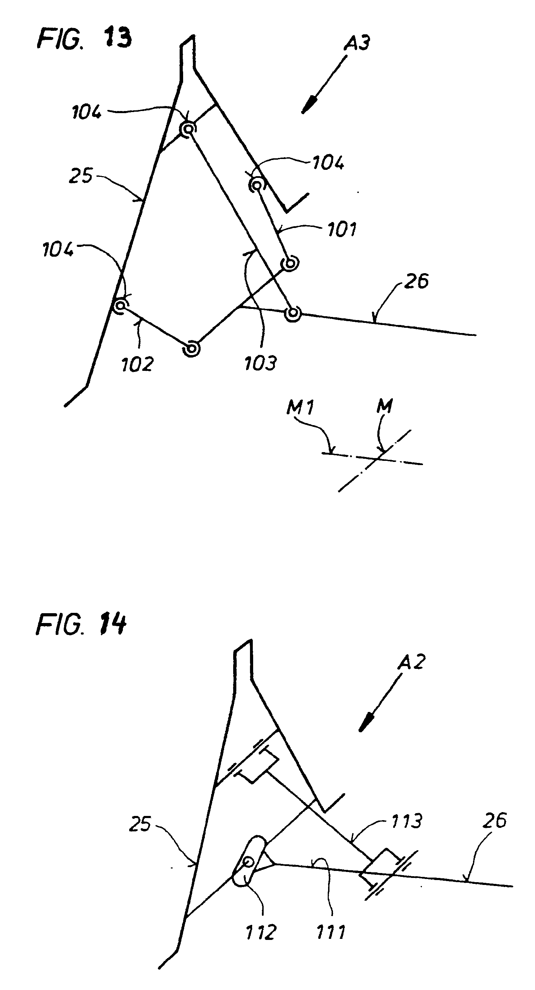

In Fig. 13 ist eine weitere als räumliches Lenkergetriebe ausgebildete Ausgleichsvorrichtung A3 dargestellt. Das hier als Anbaubock ausgebildete Traggestell 25 und der Maschinenrahmen 26 weisen je drei Gelenkpunkte 104 auf, an denen Lenker 101, 102, 103 kugelgelenkig angelenkt sind, die das Traggestell 25 mit dem Maschinenrahmen 26 verbinden. Auch diese Ausgestaltung läßt Schwenkbewegungen um die Schwenkachsen M und M1 zu, wobei die quergerichtete Schwenkachse M im Schnittpunkt der geradlinigen Verlängerung des Lenkers 103 mit der Ebene der Lenker 101, 102 liegt. Die längsliegende Schwenkachse M1 wird durch den Schnittpunkt der geradlinigen Verlängerungen der Lenker 101, 102 definiert.

In Fig. 14 ist das wiederum als Anbaubock ausgebildete Traggetell 25 über einen Lenker 113 und ein kreisbogenförmiges Schubgelenk 112 mit dem als Schwinge 111 ausgebildeten Teil des Maschinenrahmens 26 verbunden. Die geradlinige Verlängerung des Lenkers 113 und die Radien (Bahnnormalen) des Schubgelenks 112 schneiden sich im Momentanpol und damit in der Schwenkachse, so daß wiederum eine Ausgleichsvorrichtung A2 mit unterhalb des Maschinenrahmens 16 querliegender Schwenkachse geschaffen ist.

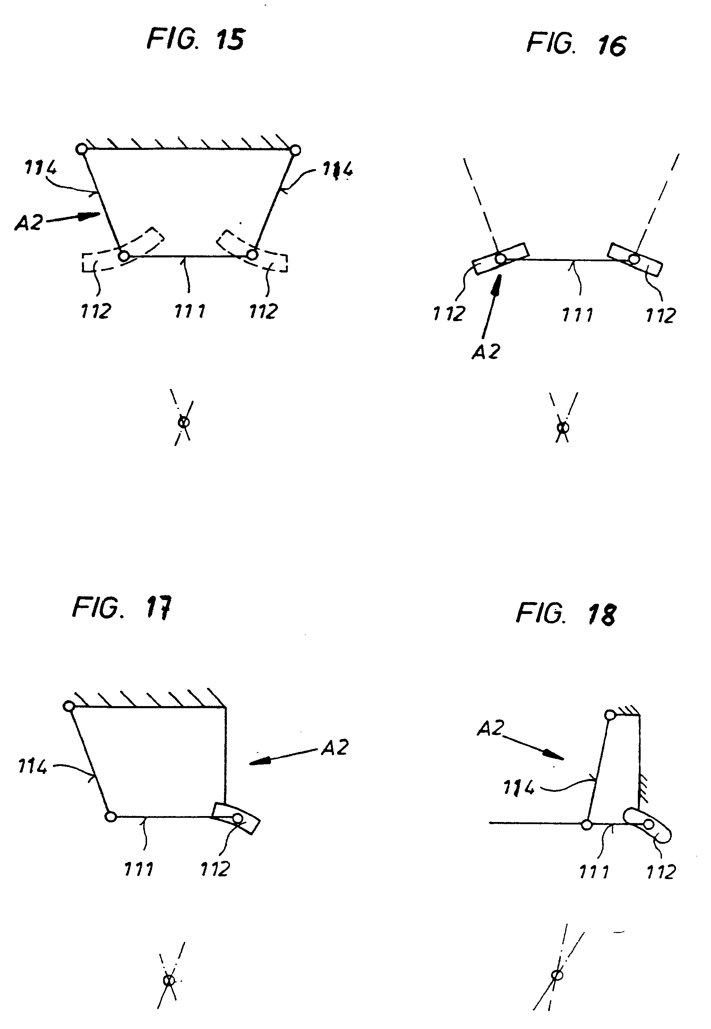

Die einzelnen Glieder oder Gelenke eines Gelenkvierecks können entsprechend den gestellten Bedingungen verschiedenartig ausgestaltet werden. So sind beispielsweise in Fig. 15 die Lenker 114 durch das strichliniert eingezeichnete kreisbogenförmige Schubgelenk 112 ersetzbar, deren Radien (Bahnnormalen) den Lenkern 114 entsprechen.

Fig. 16 zeigt als Ersatz der Lenker 114 Schubgelenke 112 mit geraden Schiebeführungen, deren Bahnnormalen sich im Momentanpol schneiden.

In Fig. 17 ist nur ein Lenker durch ein kreisbogenförmiges Schubgelenk 112 ersetzt, dessen Radien sich im Momentanpol mit der geradlinigen Verlängerung eines Lenkers 114 schneiden. Fig. 18 zeigt eine ähnliche Ausgestaltung.

In Fig. 19 bis 23 sind des weiteren unterschiedliche Ausgestaltungen von Gelenkvierecken als Ausgleichsvorrichtungen A2 dargestellt, die je eine unterhalb der Arbeitsebene eines Rech- oder Mähwerks 12 angeordnete querliegende Schwenkachse M haben. In Fig. 19 ist eine mit dem Traggestell 13 verbundene Basis 121 unterhalb einer das Mähwerk 12 tragenden Schwinge 122 angeordnet und mit dieser über Lenker 123 verbunden ; deren Verlängerungen schneiden sich in dem Momentanpol, durch den die querliegende Schwenkachse M verläuft. Die Basis 121 ist hierbei kleiner bemessen als die Schwinge 122.

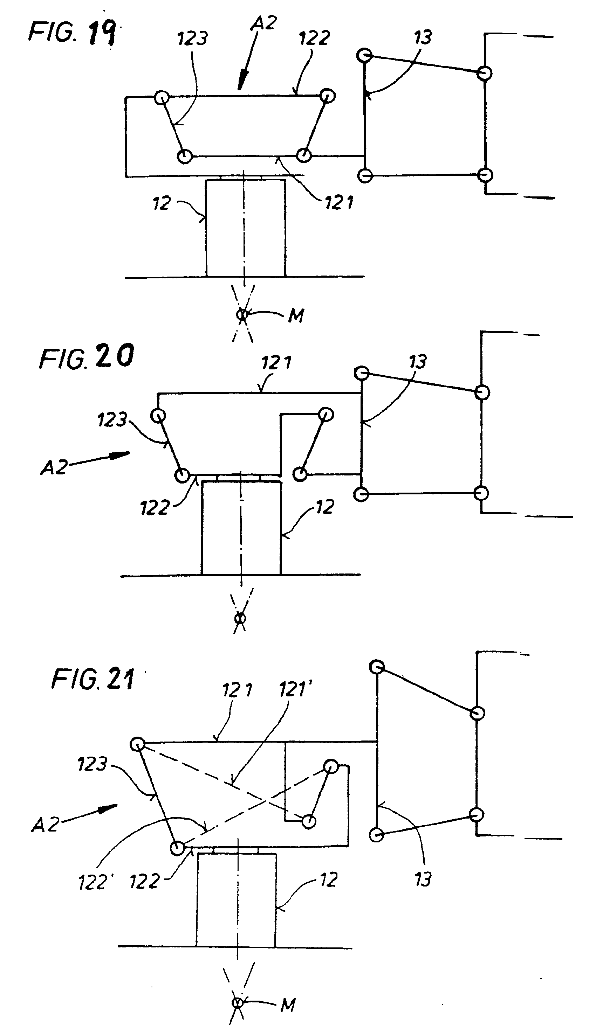

Gemäß Fig. 20 ist die Basis 121 über der Schwinge 122 angeordnet und größer als diese bemessen.

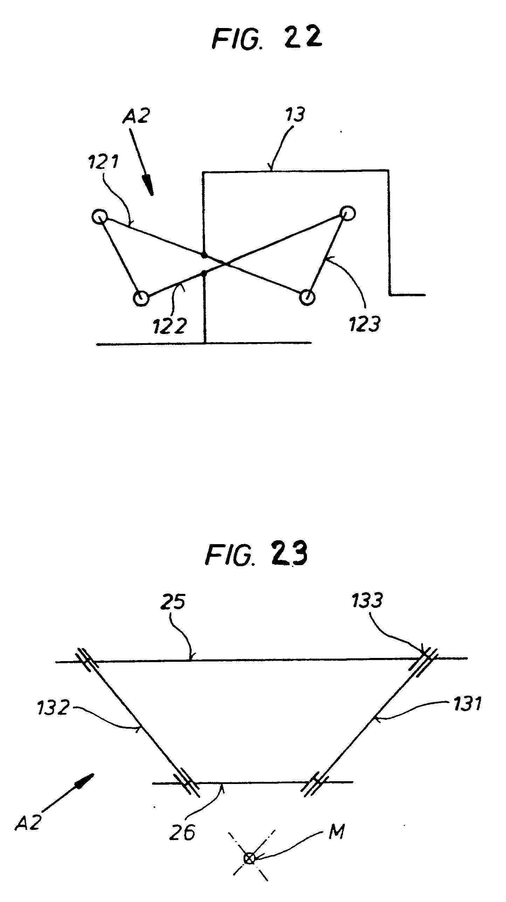

In Fig. 21 kreuzt sich die strichpunktiert eingezeichnete ideelle Verbindungslinie 121' der Gelenke an der Basis 121 mit der ideellen Verbindungslinie 122' der Gelenke an der Schwinge 122.

Fig. 22 zeigt eine Ausgleichsvorrichtung A2, bei der die Basis 121 und die Schwinge 122 sich kreuzen.

Bei der Ausgleichsvorrichtung A2 nach Fig. 23 sind zwei mit dem Traggestell 25 als Basis und mit dem Rahmen 26 als Schwinge verbundene Lenker 131, 132 als Blattfedern ausgebildet und an den Koppelpunkten 133 eingespannt.

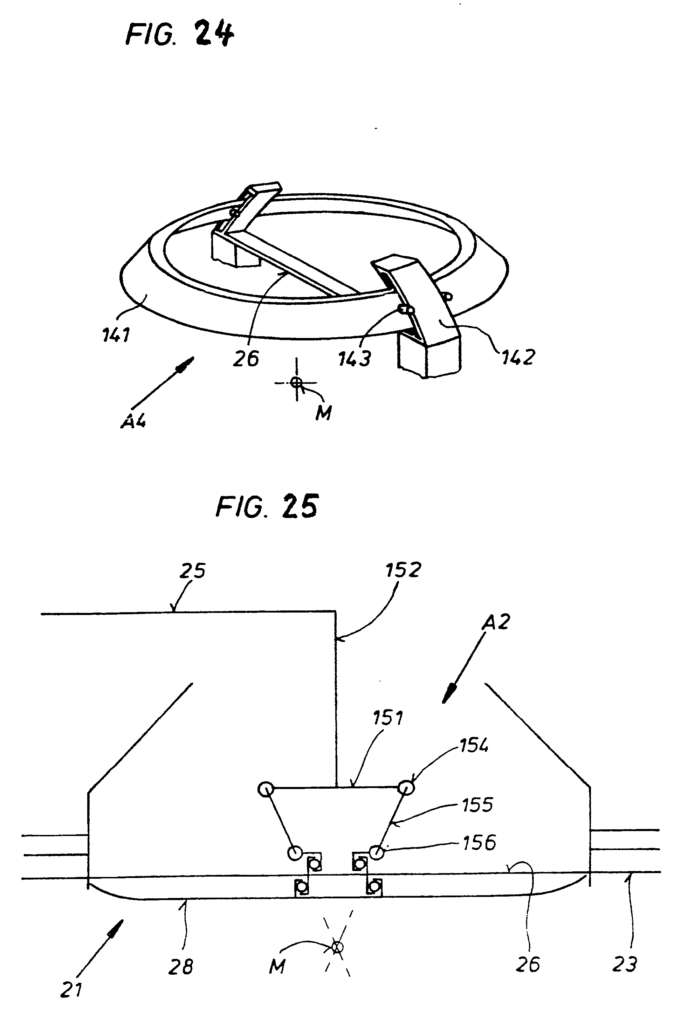

in Fig. 24 ist eine Ausgleichsvorrichtung A4 dargestellt, die sphärisch um beliebige, durch einen virtuellen Schwenkpunkt verlaufende geometrische Achsen, darunter auch eine querliegende Schwenkachse M, schwenkbar ist. Am Traggestell ist ein Kugelsegment 141 angebracht, auf dem mit dem Maschinenrahmen 26 eines Rech- oder Mähwerkes verbundene Gleitstücke 142 verschiebbar angeordnet sind. Durch Stifte 143 wird ein Verdrehen um eine senkrechte Achse verhindert ; anstelle der Stifte können auch Federn als Anschläge vorgesehen werden. Die Gleitstücke 142 können durch Rollen oder Kugeln ersetzt werden.

In Fig. 25 ist eine Heumaschine 21 mit einem topfförmigen Werkzeug 23 dargestellt. Ein senkrechter Arm 152 des Traggestells 25 endet in einer Platte 151, die Gelenkpunkte 154 besitzt. Am Maschinenrahmen 26 sind Gelenkpunkte 156, die über Lenker 155 mit Gelenkpunkten 154 verbunden sind. Damit wird eine Ausgleichsvorrichtung A2 mit Schwenkbarkeit um eine unter der Platte 151 angeordnete querliegende Schwenkachse M geschaffen ; hinzukommen kann eine Schwenkbarkeit um eine zweite Achse. Im Gegensatz zu den Heumaschinen nach Fig. 4 bis 7 ist hier anstelle eines Fahrgestells ein Gleitteller 28 vorhanden, der die Abstützung und Führung der Heumaschine 21 auf dem Untergrund bewirkt.

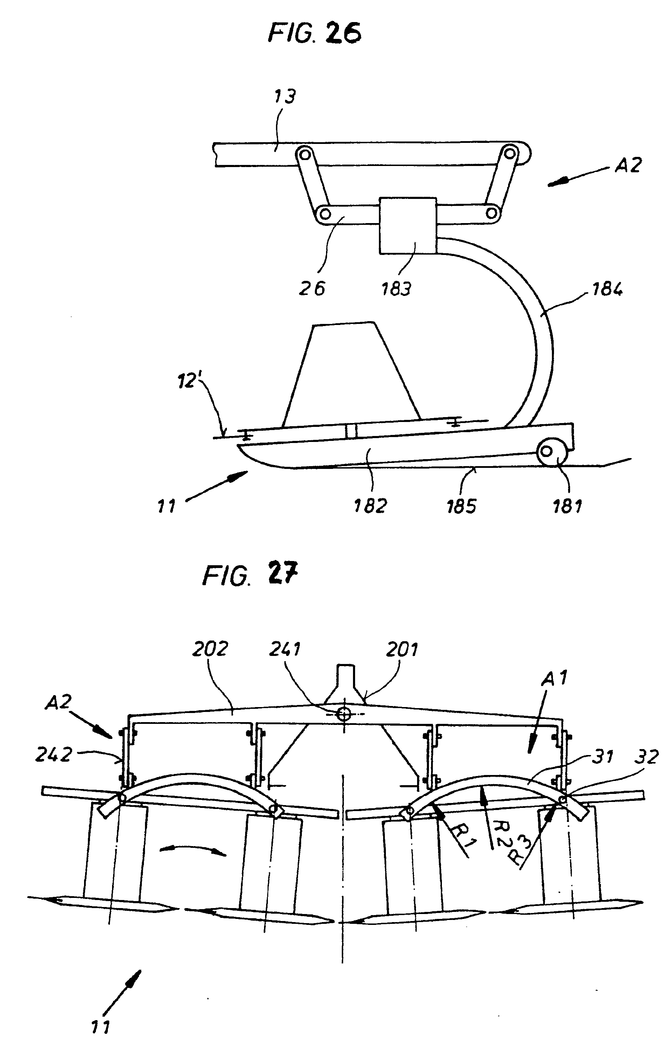

In Fig. 26 ist ein Scheibenmähwerk mit einer Ausgleichsvorrichtung A2, die Schwenkungen um eine querliegende Schwenkachse ermöglicht, in Seitenansicht dargestellt. Ein Holm 183 ist hierbei ein Teil des Maschinenrahmens 26 und ist über einen Arm 184 mit einem Querbalken 182 verbunden. Der Querbalken 182 trägt drehbar gelagerte Werkzeuge mit Schneidmessern 12'. Unterhalb des Querbalkens 182 ist eine Gleitplatte 185 angeordnet, die im vorderen Bereich des Querbalkens 182 in diesen übergeht. An dieser Stelle ist die Gleitplatte 185 federelastisch ausgebildet.

Zwischen dem Querbalken 182 und der Gleitplatte 185 ist eine Winkelverstellung möglich. Dazu dient zweckmäßigerweise eine am Querbalken 182 angebrachte Exzenterscheibe 181. Durch Verdrehen der Exzenterscheibe 181 kann die Neigung der Rotationsebene der Arbeitswerkzeuge und der Schneidmesser 12' gegenüber der Bodenebene und somit die Schnitthöhe der Schneidmesser eingestellt werden. Anstelle der Exzenterscheibe 181 kann auch eine Verstellspindel od.dgl. verwendet werden.

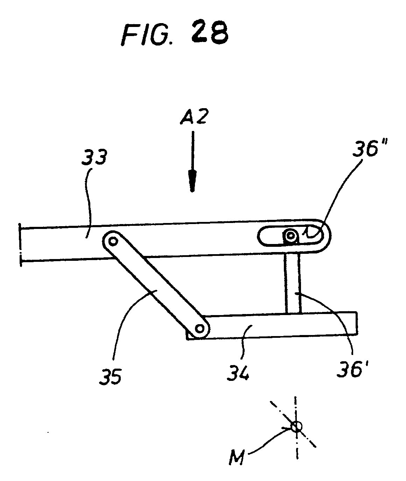

Das Prinzip der Quer- und Längsausgleichsvorrichtungen kann auch für mehrere nebeneinander angeordnete Mähwerkseinheiten angewandt werden. So ist bei dem in Fig. 27 dargestellten Mähwerk ein Anbaubock 201 mit einem Schwenkzapfen 241 versehen und trägt einen Quersteg 202. An diesem sind über Gelenkvierecke 242, die eine Schwenkung um eine Querachse zulassen, zwei Kulissenführungen 31 aufgehängt, die eine Verschwenkung in Richtung des Doppelpfeils zulassen.

Bei der rechten Kulissenführung ist durch drei Pfeile $R_1$, $R_2$, $R_3$ angedeutet, daß die Kulisse 31 von der Kreisbogenform abweichend verschiedene Kurvenradien besitzt. Damit wird erreicht, daß der seitliche Abstand zwischen zwei benachbarten Mähwerkseinheiten in der Höhe ihrer Ringkragen an der Mittelebene auch dann unverändert bleibt, wenn die Mähwerkseinheiten Schwenkbewegungen um Längsachsen durchführen.

Die in Fig. 28 dargestellte, aus einem Gelenkviereck bestehende Ausgleichsvorrichtung A2 ist in ähnlicher Weise ausgebildet wie die Ausgleichsvorrichtung nach Fig. 2. An der Basis 33 und der Schwinge 34 ist hierbei ein Lenker 35 jeweils gelenkig befestigt, ein weiterer Lenker 36' ist dagegen fest mit der Schwinge 34 verbunden und in einem Langloch 36" der Basis 33 verschiebbar geführt. Die querliegende Schwenkachse M ist durch den Schnittpunkt der Verlängerungen der beiden Lenker 35 und 36' bestimmt.

## Patentansprüche

1. Mäh- oder Heumaschine mit mindestens einem rotierend antreibbaren Mäh- oder Rechwerk (12, 22), das mit als Mähmesser oder als Rechzinken ausgebildeten, eine Arbeitsebene definierenden Werkzeugen versehen und mittels einer Ausgleichsvorrichtung (A1, A2, A3, A4) an einem mit einem Schlepper verbindbaren Traggestell um mindestens eine quer zur Fahrtrichtung verlaufende Schwenkachse schwenkbar abgestützt ist, dadurch **gekennzeichnet**, daß die Ausgleichsvorrichtung (A1, A2, A3, A4) derart ausgebildet ist, daß mindestens eine quer zur Fahrtrichtung liegende Schwenkachse des Mäh- oder Rechwerks (12, 22) durch einen unterhalb der Arbeitsebene angeordneten Momentanpol verläuft.

2. Mäh- oder Heumaschine nach Anspruch 1, dadurch **gekennzeichnet**, daß die durch den Momentanpol verlaufende querliegende Schwenkachse (M) in Betriebsstellung des Mäh- oder Rechwerks (12, 22) unterhalb der Oberfläche des Erdbodens (10) liegt.

3. Mäh- oder Heumaschine nach Anspruch 1 oder 2, dadurch **gekennzeichnet**, daß die Ausgleichsvorrichtung (A1) eine kreisbogenförmig um die querliegende Schwenkachse (M) gekrümmte Führungsbahn (31) und mindestens einen in dieser verschiebbar geführten Steuerkörper (32) aufweist.

4. Mäh- oder Heumaschine nach Anspruch 3, dadurch **gekennzeichnet**, daß der Steuerkörper (32) eine Rolle aufweist, die in einer Kulisse als Führungsbahn (31) geführt ist.

5. Mäh- oder Heumaschine nach Anspruch 1 oder 2, dadurch **gekennzeichnet**, daß die Ausgleichsvorrichtung (A2, A3) als Gelenkgetriebe ausgebildet ist.

6. Mäh- oder Heumaschine nach Anspruch 5, dadurch **gekennzeichnet**, daß das Gelenkgetriebe als Gelenkviereck (33, 34, 35, 36 ; 42, 43, 44, 25, 26 ; 48, 49, 50, 51, 53, 65, 66, 72, 73, 77, 78, 81, 82, 83, 101, 102, 103, 104, 111, 113, 121, 122, 123, 131, 132, 151, 155, 242) ausgebildet und derart angeordnet ist, daß dessen Momentanpol auf der durch den Momentanpol verlaufenden querliegenden Schwenkachse der Ausgleichsvorrichtung liegt.

7. Mäh- oder Heumaschine nach Anspruch 5, dadurch **gekennzeichnet**, daß die Ausgleichsvorrichtung (A3) als räumliches Lenkergetriebe ausgebildet ist.

8. Mäh- oder Heumaschine nach einem der Ansprüche 5 bis 7, dadurch **gekennzeichnet**, daß ein Teil der Gelenke des Gelenkgetriebes Schubgelenke (112) sind.

9. Mäh- oder Heumaschine nach einem der Ansprüche 5 bis 8, dadurch **gekennzeichnet**, daß das Traggestell (13 ; 25) als Basis des Gelenkgetriebes und das Mäh- oder Rechwerk (12 ; 22) als Schwinge (34, 47) ausgebildet sind.

10. Mäh- oder Heumaschine nach Anspruch 9, dadurch **gekennzeichnet**, daß die Lenker (131, 132) des Gelenkgetriebes als Blattfedern ausgebildet und an den Anlenkungen der Basis und der Schwinge fest eingespannt sind.

11. Mäh- oder Heumaschine nach Anspruch 9, dadurch **gekennzeichnet**, daß die durch das Traggestell (13 ; 15) gebildete Basis des Gelenkgetriebes unterhalb oder oberhalb der durch das Mäh- oder Rechwerk (12; 22) gebildeten Schwinge des Gelenkgetriebes angeordnet ist.

12. Mäh- oder Heumaschine nach einem der Ansprüche 9 bis 11, dadurch **gekennzeichnet**, daß die durch das Traggestell (13 ; 25) gebildete oder mit diesem verbundene Basis des Gelenkvierecks etwa lotrecht und die durch das Mäh- oder Rechwerk (12 ; 22) gebildete oder mit diesem verbundene Schwinge etwa waagerecht angeordnet sind.

13. Mäh- oder Heumaschine nach einem der Ansprüche 5 bis 12, dadurch **gekennzeichnet**, daß zwei durch Gelenkvierecke gebildete Ausgleichsvorrichtungen (A2) über einen Zwischenrahmen (60) zu einer Baueinheit miteinander verbunden sind.

14. Mäh- oder Heumaschine nach einem der Ansprüche 1 bis 3, dadurch **gekennzeichnet**, daß die Ausgleichsvorrichtung (A4) eine einzige kugelig ausgebildete Zone (141) aufweist.

15. Mäh- oder Heumaschine nach einem der Ansprüche 1 bis 14, dadurch **gekennzeichnet**, daß die Ausgleichsvorrichtung (A2) in einer Trommel des Mähwerks (12) oder in dem Rechwerk (22) angeordnet ist.

16. Mäh- oder Heumaschine nach einem der Ansprüche 1 bis 15, dadurch **gekennzeichnet**, daß die durch den Momentanpol verlaufende querliegende Schwenkachse (M) innerhalb der vertikalen Projektion der äußeren Begrenzung der Aufstandsfläche des Mäh- oder Rechwerks verläuft.

## Claims

1. Reaping or haying machine comprising at least one rotatingly drivable mowing or raking unit (12, 22) which is provided with implements constructed as mowing blades or raking tines and defining a working plane and by means of a compensating means (A1, A2, A3, A4) is supported on a support frame connectable to a tractor pivotally about at least one pivot axis extending transversely of the travelling direction, characterized in that the compensating means (A1, A2, A3, A4) is constructed in such a manner that at least one pivot axis of the mowing or raking unit (12, 22) lying transversely of the travelling direction extends through an instantaneous pole arranged beneath the working plane.

2. Reaping or haying machine according to claim 1, characterized in that the transversely disposed pivot axis (M) extending through the instantaneous pole lies beneath the surface of the ground (10) in the operating position of the mowing or raking unit (12, 22).

3. Reaping or haying machine according to claim 1 or 2, characterized in that the compensating means (A1) comprises a guide path (31) curved arcuately about the transversely disposed pivot axis (M) and at least one control body (32) guided displaceably in said path.

4. Reaping or haying machine according to claim 3, characterized in that the control body (32) comprises a roller which is guided in a slide track as guide path (31).

5. Reaping or haying machine according to claim 1 or 2, characterized in that the compensating means (A2, A3) is constructed as linkage mechanism.

6. Agricultural reaping or haying machine according to claim 5, characterized in that the linkage mechanism is constructed as four-bar linkage (33, 34, 35, 36 ; 42, 43, 44, 25, 26 ; 48, 49, 50, 51, 53, 65, 66, 72, 73, 77, 78, 81, 82, 83, 101, 102, 103, 104, 111, 113, 121, 122, 123, 131, 132, 151, 155, 242) and is arranged in such a manner that the instantaneous pole thereof lies on the transversely disposed pivot axis of the compensating means extending through the instantaneous pole.

7. Reaping or haying machine according to claim 5, characterized in that the compensating means (A3) is constructed as three-dimensional link mechanism.

8. Agricultural reaping or haying machine according to any one of the claims 5 to 7, characterized in that some of the joints of the linkage mechanism are thrust joints (112).

9. Reaping or haying machine according to any one of claims 5 to 8, characterized in that the support frame

7

(13 ; 25) is configured as base of the linkage mechanism and the mowing or raking unit (12 ; 22) as rocker (34, 47).

10. Reaping or haying machine according to claim 9, characterized in that the links (131, 132) of the linkage mechanism are constructed as leaf springs and are fixedly clamped at the articulations of the base and the rocker.

11. Reaping or haying machine according to claim 9, characterized in that the base of the linkage mechanism formed by the support frame (13 ; 15) is arranged beneath or above the rocker of the linkage mechanism formed by the mowing or raking unit (12 ; 22).

12. Reaping or haying machine according to any one of claims 9 to 11, characterized in that the base of the four-bar linkage formed by the support frame (13 ; 25) or connected thereto is arranged substantially vertical and the rocker formed by the mowing or raking unit (12 ; 22) or connected thereto is arranged substantially horizontal.

13. Reaping or haying machine according to any one of claims 5 to 12, characterized in that two compensating means (A2) formed by two four-bar linkages are connected together via an intermediate frame (60) to from a constructional unit.

14. Reaping or haying machine according to any one of claims 1 to 3, characterized in that the compensating means (A4) comprises one sole spherically formed zone (141).

15. Reaping or haying machine according to any one of claims 1 to 14, characterized in that the compensating means (A2) is arranged in a drum of the mowing unit (12) or in the raking unit (22).

16. Reaping or haying machine according to any one of claims 1 to 15, characterized in that the transversely disposed pivot axis (M) extending through the intantaneous pole extends within the vertical projection of the outer boundary of the support surface of the mowing or raking unit.

## Revendications

1. Machine de fauchage ou de fanage avec au moins un ensemble de fauchage ou de râteau (12, 22), qui est équipée d'outils se présentant sous la forme de couteaux de fauchage ou de dents de ratissage, et définissant un plan de travail, et qui par l'intermédiaire d'un dispositif d'équilibrage (A1, A2, A3, A4) est soutenue sur un cadre de support accrochable à un tracteur de manière inclinable autour d'au moins un axe d'inclinaison s'étendant transversalement à la direction de déplacement, **caractérisée en ce que** le dispositif d'équilibrage (A1, A2, A3, A4) se présente sous une forme telle qu'au moins un des axes s'étendant transversalement à la direction de déplacement du mécanisme de fauchage ou de ratissage (12, 22) passe par un centre instantané de rotation situé sous le plan de travail.

2. Machine de fauchage ou de fanage selon la revendication 1, **caractérisée en ce que** l'axe transversal d'inclinaison (M) passant par le centre instantané de rotation se situe sous la surface du sol pendant le fonctionnement du mécanisme de fauchage ou de ratissage (12, 22).

3. Machine de fauchage ou de fanage selon la revendication 1 ou 2, **caractérisée en ce que** le dispositif d'équilibrage (A1) présente un chemin de guidage (31) cintré en forme d'arc de cercle autour de l'axe d'inclinaison (M) et au moins un corps de guidage (32) guidé à déplacement dans ce chemin de guidage.

4. Machine de fauchage ou de fanage selon la revendication 3, **caractérisée en ce que** le corps de guidage (32) présente un rouleau guidé dans une coulisse servant de chemin de guidage (31).

5. Machine de fauchage ou de fanage selon la revendication 1 ou 2, **caractérisée en ce que** le dispositif d'équilibrage (A2, A3) se présente sous la forme d'un mécanisme articulé.

6. Machine de fauchage ou de fanage selon la revendication 5, **caractérisée en ce que** le mécanisme articulé se présente sous la forme d'un quadrangle articulé (33, 34, 35, 36 ; 42, 43, 44, 25, 26 ; 48, 49, 50, 51, 53, 65, 66, 72, 73, 77, 78. 81, 82, 83, 101, 102, 103, 104, 111, 113, 121, 122, 123, 131, 132, 151, 155, 242) et est disposé de telle manière que son centre instantané de rotation est situé sur l'axe transversal d'inclinaison du dispositif d'équilibrage passant par le centre instantané de rotation.

7. Machine de fauchage ou de fanage selon la revendication 5, **caractérisée en ce que** le dispositif d'équilibrage (A3) se présente sous la forme d'un mécanisme à bielle.

8. Machine de fauchage ou de fanage selon l'un des revendications 5 à 7, **caractérisée en ce qu'**une partie des articulations du mécanisme articulé sont des joints à glissière (112).

9. Machine de fauchage ou de fanage selon l'une des revendications 5 à 8, **caractérisée en ce que** le cadre de support (13 ; 25) se présente sous la forme d'un support pour le mécanisme articulé et que le mécanisme de fauchage ou de ratissage (12 ; 22) se présente sous la forme d'une balancelle (34, 47).

10. Machine de fauchage ou de fanage selon la revendication 9, **caractérisée en ce que** les bras articulés (131, 132) du mécanisme articulé se présentent sous la forme de ressorts à lames et sont attachés solidement aux articulations du support et de la balancelle.

11. Machine de fauchage ou de fanage selon la revendication 9, **caractérisée en ce que** le support du mécanisme articulé formé par le cadre de support (13 ; 15) est disposé au-dessus ou en-dessous de la balancelle du mécanisme articulé formée par le mécanisme de fauchage ou de ratissage (12, 22).

12. Machine de fauchage ou de fanage selon l'une des revendications 9 à 11, **caractérisée en ce que** le socle du quadrangle articulé formé par le cadre de support (13 ; 25) ou relié à celui-ci est disposé sensiblement suivant la verticale, et que la bielle oscillante formée par le mécanisme de fauchage ou de ratissage (12, 22) ou reliée à celui-ci est disposée sensiblement suivant l'horizontale.

13. Machine de fauchage ou de fanage selon l'une des revendications 5 à 12, **caractérisée en ce que** deux dispositifs d'équilibrage (A2) formés par le quadrangle articulé sont reliés l'un à l'autre par l'intermédiaire d'un cadre intermédiaire pour former un ensemble.

14. Machine de fauchage ou de fanage selon les revendications 1 à 3, **caractérisée en ce que** le dispositif d'équilibrage (A4) présente une zone (141) réalisée sous forme d'une unique pièce conique.

15. Machine de fauchage ou de fanage selon l'une des revendications 1 à 14, **caractérisée en ce que** le dispositif d'équilibrage (A2) est disposé dans un tambour du mécanisme de fauchage (12) ou du mécanisme de ratissage (22).

16. Machine de fauchage ou de fanage selon l'une des revendications 1 à 15, **caractérisée en ce que** l'axe transversal d'inclinaison (M) passant par le pôle de rotation s'étend à l'intérieur de la projection verticale de l'enveloppe de la surface de contact au sol du mécanisme de fauchage ou de ratissage.

## FIG. 1

## FIG. 2

## FIG. 3

FIG. **4**

FIG. 5

FIG. *6*

EP 0 339 231 B1

FIG. 7

EP 0 339 231 B1

FIG. 8

FIG. 9

FIG. 10

FIG. 11

FIG. 12

FIG. **13**

A3

104

25

104

104

101

26

102    103

M1    M

FIG. **14**

A2

25

113    26

112    111

FIG. 15

114

A2

112    111    112

FIG. 16

112    111    112

A2

FIG. 17

114

A2

111    112

FIG. 18

A2

114

111    112

FIG. 19

FIG. 20

FIG. 21

## FIG. 22

## FIG. 23

FIG. 24

141
26
143
142
A4
M

FIG. 25

25
152
A2
151
154
155
156
28
M
21
26
23

## FIG. 26

## FIG. 27

## FIG. 28